# EUROPÄISCHE PATENTANMELDUNG

(11) **EP 2 600 139 A1**
(43) Veröffentlichungstag der Anmeldung: **05.06.2013**
(21) Anmeldenummer: 12194409.4
(22) Anmeldetag: 27.11.2012
(51) Int. Cl.: G01N 21/47, G01M 15/10, C08K 3/22

(54) **Kalibrierelement und Verfahren zum Kalibrieren eines Streulichtmessgeräts**

(30) Priorität: 30.11.2011 AT 6502011
(71) Anmelder: DiTest Fahrzeugdiagnose GmbH, 8020 Graz (AT)
(72) Erfinder: Reil, Frank, 8043 Graz (AT); Schmidt, Volker, 8212 Pischelsdorf (AT)
(74) Vertreter: Weiss, Christian

(57) **Zusammenfassung**

Zur Kalibrierung von Streulichtmessgeräten können Kalibrierelemente mit einer definierten Streulichtverteilung eingesetzt werden. Um ein solches Kalibrierelement mit einer weitestgehend isotropen Streulichtverteilung zu erzielen, wird das Kalibrierelement (20) mit einem zylindrischen Streukörper (21) ausgeführt, der konzentrisch von einem zylindrischen Absorberkörper (23) umgeben ist.

## Beschreibung

Die gegenständliche Erfindung betrifft ein Kalibrierelement mit einem Streukörper, der in einer Trägermatrix eingebettete Streuzentren und einen Absorberkörper aufweist und ein Verfahren zum Kalibrieren eines Streulichtmessgeräts mit einem solchen Kalibrierelement.

Zur Messung von Partikeln in Abgasen werden häufig Streulichtverfahren eingesetzt. Dabei wird das Abgas durch ein Messvolumen geleitet, in das Licht, z.B. Laserlicht, eingestrahlt wird. Das Licht wird an den Partikeln gestreut und das gestreute Licht wird von einer Anzahl von in vorgegebener und fixer Position angeordneten Sensoren erfasst. Die erfasste Streulichtintensität ist ein Maß für die Partikelverteilung im Abgas.

Damit ein solches Messverfahren eingesetzt werden kann, muss das Streulichtmessgerät kalibriert werden, um eine ordnungsgemäße Funktion, also eine richtige Messung, sicherzustellen. Dazu wird z.B. in der WO 2011/104040 A1 eine Vorrichtung und ein Verfahren zur Kalibrieren eines Streulichtmessgerätes offenbart. Dabei wird ein quaderförmiges Kalibrierelement verwendet, das einen Streukörper aus in einem Trägermaterial eingebetteten Streuzentren aufweist. Die Streuzentren weisen eine definierte Größe und einen definierten Abstand zueinander auf, um eine definierte Verteilung und Intensität des davon erzeugten Streulichtes zu erzielen. Weiters beschreibt die WO 2011/104040 A1 einen Absorber in Form einer getönte Schicht, die am Lichteintritt und/oder am Lichtaustritt angeordnet werden kann, um eine Dämpfungswirkung zu erzielen und eine gewünschte Streulichtintensität einzustellen. Zwischen Streukörper und getönter Schicht gibt es dadurch am Lichtaustritt eine ebene Grenzschicht, an der es zur Brechung des Streulichtes kommt. Die Dämpfungswirkung eines Absorbers hängt aber vom Weg ab, den das Licht im Absorber zurücklegt. Je länger der Weg, umso stärker wird das Licht gedämpft. Aufgrund der Brechung und der Dämpfungswirkung ist die Streulichtverteilung am Lichtaustritt aus dem Streukörper nicht homogen verteilt. Das Messergebnis ist damit abhängig von der relativen Position der Sensoren zum Streukörper, was die Kalibrierelement auch empfindlich auf Lageungenauigkeiten von Streukörper und/oder Sensoren macht. Bei der Verwendung einer getönten Schicht als Absorber, die auf dem Streukörper aufgebracht ist, kann es aufgrund Diffusion auch zu einer Vermischung der Medien des Absorbers und des Streukörpers kommen, was negativ für die Langzeitstabilität der Kalibrierelement ist. Ebenso können nur feste Absorber eingesetzt werden und keine weichen oder gar flüssigen Materialien, was die Flexibilität der Kalibrierelement einschränkt.

Es ist daher eine Aufgabe der gegenständlichen Erfindung ein Kalibrierelement für eine Streulichtmesseinrichtung anzugeben, das einfach handhabbar ist und das eine weitestgehend isotrope Streulichtverteilung sicherstellt.

Diese Aufgabe wird erfindungsgemäß dadurch gelöst, dass der Streukörper zylindrisch ausgeführt ist und ein Absorberkörper konzentrisch um den Streukörper angeordnet ist. Damit erzielt man in einer Querschnittsebene normal zur Rotationsachse des zylinderförmigen Streukörpers eine weitegehend isotrope Streulichtverteilung ohne Winkelabhängigkeit der Abschwächung des Streulichtes im Absorberkörper. Ein solches Kalibrierelement ist somit insbesondere unempfindlich gegenüber Lageungenauigkeiten in axialer Richtung und auch gegenüber winkelmäßigen Lageungenauigkeiten der Detektoranordnungen in der Querschnittsebene des Streukörpers, was die Positionierung des Kalibrierelements innerhalb der Messkammer erheblich erleichtert. Damit kann ein Streulichtmessgerät sicher kalibriert werden.

Mit einem radial zwischen Streukörper und Absorberkörper und konzentrisch dazu angeordneten ersten Glaszylinder erreicht man eine klar definierte Grenzfläche zwischen Streukörper und Absorberkörper, was einerseits hilft, eine mögliche Vermischung der Medien von Streukörper und Absorberkörper zu verhindern und andererseits auch parasitäre Streulichter, die die Kalibrierung stören würden, unterbindet.

Mit einem radial außen und konzentrisch um den Absorberkörper angeordneten zweiten Glaszylinder können sowohl Absorberkörper und Streukörper wirkungsvoll gegen Abnutzung und Beschädigung geschützt werden. Gleichzeitig schafft man damit wieder eine definierte Grenzfläche ohne das Einbringen von parasitären Streulichtern.

Die gegenständliche Erfindung wird nachfolgend unter Bezugnahme auf die Figuren 1 bis 3, die beispielhaft und schematisch vorteilhafte Ausgestaltungen der Erfindung zeigen, erläutert. Dabei zeigt
- Fig. 1: ein Streulichtmessgerät in einer Seitenansicht,
- Fig. 2: ein Streulichtmessgerät mit Kalibrierelement im Schnitt und
- Fig. 3: ein erfindungsgemäßes Kalibrierelement.

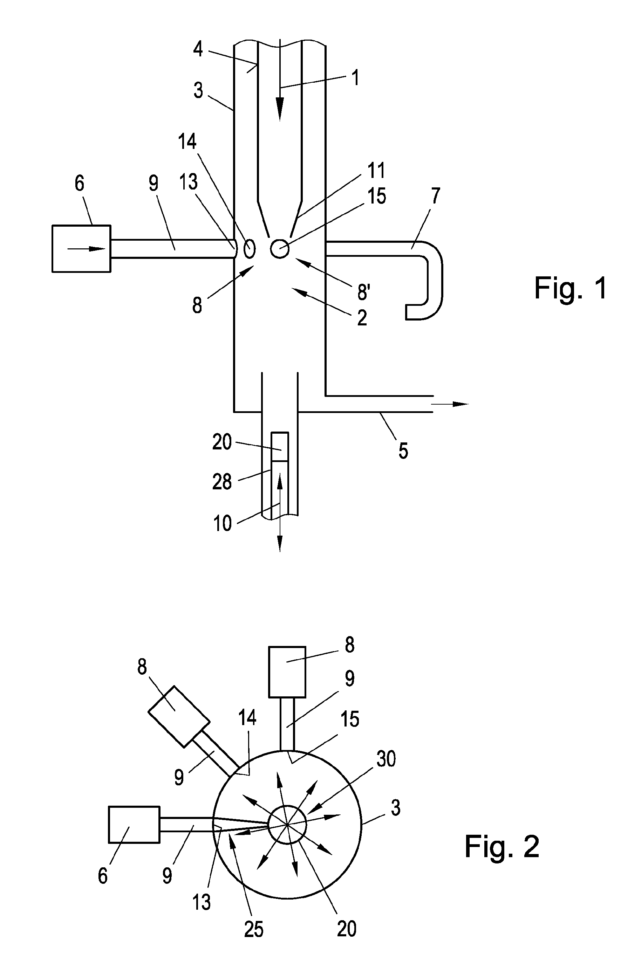

Das in Fig. 1 dargestellte Streulichtmessgerät ist beispielsweise zur kontinuierlichen Messung der Partikelkonzentration im Abgas von Brennkraftmaschinen geeignet, wobei dieses Abgas über eine hier nicht dargestellte Sonde beispielsweise am Auspuffende der Brennkraftmaschine entnommen und über den Pfeil 1 dem Gerät zugeführt werden kann. Dieses besteht im Wesentlichen aus einer ein Messvolumen 2 umgebenden Messkammer 3, welche eine Zuleitung 4 und Ableitung 5 für das partikelbeladene Messgas zum bzw. vom Messvolumen 2 und eine Lichtquelle 6, wie z.B. ein Laser, mit zugehöriger im Strahlweg gegenüberliegender Lichtsenke 7 aufweist. Weiters ist zumindest eine Detektoranordnung 8 angeordnet, die das aufgrund der Partikeln im Messgas abgestrahlte Streulicht 30 in der Ebene des Lichtstrahls 25 bzw. in einer Querschnittsebene der Messkammer 3 erfasst. Ebenso können in gleicher Weise um Winkel versetzt noch weitere Detektoranordnungen 8' angeordnet sein, wie in Fig. 2 besser ersichtlich. D.h., dass die Detetektoranordnung 8 bzw. 8', oder zumindest die optischen Fenster 14, 15, in der Ebene des Lichtstrahls 25 bzw. in einer Querschnittsebene der Messkammer 3 angeordnet sind. Die Lichtquelle 6 und/oder die Detektoranordnung 8, 8' kann auch direkt an der Messkammer 3 angeordnet sein und nicht wie hier dargestellt in Abstand dazu. Die optischen Fenster 13, 14 und 15 können dazu als Linsenoptikvorsätze am Ende von Lichtleitern 9 ausgebildet sein, welche Lichtquelle 6 und Detektoranordnung 8, 8' verbinden, was Temperaturein- bzw. -austrag verhindert.

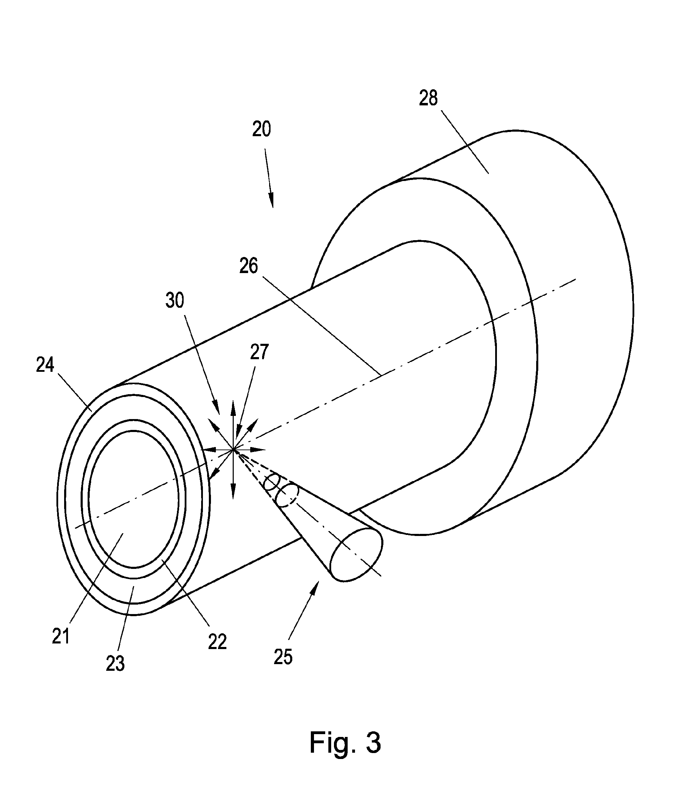

In der Messkammer 3 kann weiters ein erfindungsgemäßes Kalibrierelement 20 vorgesehen sein, vorzugsweise gegenüber dem eingesetzten Zuführteil 16 im Bereich der Ableitung 5. Dieses Kalibrierelement 20 ist bedarfsweise mittels einer hier nicht dargestellten Vorrichtung entlang des Pfeiles 10 in die Messkammer 3 einbringbar, womit die Streulichtmessung kalibrierbar ist. Das Kalibrierelement 20 wird nachfolgend unter Bezugnahme auf die Fig. 3 beschrieben.

Das Kalibrierelement 20 umfasst einen zentralen, zylindrischen Streukörper 21 bestehend aus einer transparenten Trägermatrix, z.B. eine Silikonmatrix, in der eine Anzahl von Streuzentren, z.B. Titanoxidpartikel, eingebettet werden. In den Streukörper 21 einfallendes Licht wird dabei an den Streuzentren gestreut. Die Streuzentren sind dabei möglichst homogen verteilt angeordnet, was z.B. durch Einrühren der Streuzentren in die Trägermatrix erreicht werden kann. Im Falle einer Silikonmatrix wird diese dann thermisch ausgehärtet, wobei der Aushärteprozess in der Regel mehrere Stunden in Anspruch nimmt und von einem mehrmaligen Evakuieren begleitet werden kann, um eventuell enthaltenes oder entstehendes Gas entweichen zu lassen, um eine unerwünschte Bläschenbildung zu vermeiden. Der Aufbau eines solchen Streukörpers ist an sich hinlänglich bekannt.

Weiters ist ein zylindrischer Absorberkörper 23 vorgesehen, der konzentrisch um den Streukörper 21 angeordnet ist. Radial zwischen Absorberkörper 23 und Streukörper 21 und konzentrisch dazu kann ein erster zylindrischer Glaszylinder 22, z.B. aus Borosilicatglas, angeordnet sein. Radial außen kann noch zusätzlich ein zweiter zylindrischer Glaszylinder 24, z.B. wiederum aus Borosilicatglas, angeordnet sein.

Der Absorberkörper 23 kann aus unterschiedlichen Materialien hergestellt sein bzw. bestehen, z.B. aus molekularem Farbstoff oder aus gefärbtem Glas. Ebenso ist es denkbar, dass radial innen am äußeren zweiten Glaszylinder 24 oder radial außen am innen liegenden ersten Glaszylinder 22 eine absorbierende Beschichtung aufgebracht ist, die den Absorberkörper 23 bildet.

Der äußere Glaszylinder 24 dient, falls vorhanden, in erster Linie als Schutz des innenliegenden Streukörpers 21 und des Absorberkörpers 23 gegen Verschmutzung, Abnutzung, Kratzer, oder sonstiger Beschädigungen. Außerdem ermöglicht dieser äußere Glaszylinder 24 die Verwendung auch von nicht festen Absorberkörpern 23 und sogar von flüssigen Absorberkörpern 23. Dazu kann der äußere Glaszylinder 24 das Kalibrierelement 20 stirnseitig auch verschließen.

Die beiden Glaszylinder 22, 24 können mit hoher Präzision gefertigt werden und bilden definierte, glatte Grenzflächen und erzeugen dadurch kein parasitäres Streulicht.

Eines der wesentlichen Merkmale des erfindungsgemäßen Kalibrierelements 20 ist die Auftrennung der optischen Funktionalität der Absorption und der Lichtstreuung in zwei getrennte Einheiten in Form des Streukörpers 21 und des Absorberkörpers 23. Die Streuung des Lichtes erfolgt im innenliegenden Streukörper 21. Die weitestgehend absorptionsfreie und homogene Streuung des Lichtes durch den Streukörper 21 ergibt eine sehr gute Isotropie der Streulichtintensität in der Ebene des einfallenden Lichtes. Der Streukörper 21 ist von einem konzentrisch angeordneten Absorberkörper 23 umgeben, der der Einstellung der Streulichtintensität auf ein gewünschtes Maß dient.

Durch die weitestgehend absorptionsfreie Streuung des Lichts im zylindrischen Streukörper 21 wird in diesem eine sehr gute Isotropie des Streulichts 30 erreicht. In der Querschnittsebene normal zur Achse 26 des zylindrischen Kalibrierelements 20, durch die auch das einfallende Licht 25 verläuft, wird die Grenzschicht zwischen Absorptionskörper 23 und Streukörper 21, vorteilhafterweise aber nicht notwendigerweise ausgeführt durch den ersten Glaszylinder 22, in konstanter Intensitäts- und Richtungseigenschaft von Streulicht 30 getroffen. Im Weiteren wird durch die radial im Wesentlichen konstante Dicke der absorbierenden Schicht im Absorberkörper 23, Streulicht 30 in dieser Querscnittsebene winkelunabhängig in gleicher Intensität abgegeben. Eine Winkelabhängigkeit der Abschwächung des Streulichts 30 im Absorberkörper 23 wird somit vermieden, da jeder Raumwinkelanteil des Streulichts 30 in etwa die gleiche Extinktion durch den Absorberkörper 23 erfährt.

Dazu wird der Durchmesser des Streukörpers 21 groß im Verhältnis zum Durchmesser des auftreffenden Lichtstrahles 25 bzw. zum Lichtfokus 27 gewählt. Der Durchmesser des Streukörpers 21 ist vorteilhaft mindestens zwei- bis dreimal so groß als der Durchmesser des Lichtstrahles 25, insbesondere fünf- bis zehnmal so groß.

Das Kalibrierelement 20 kann an einem axialen Ende noch ein Haltelement 28 aufweisen, um das Kalibrierelement 20 zu halten und in die Messkammer 3 einführen zu können.

Das Kalibrierelement 20 wird dabei so eingebracht, dass der Lichtstrahl 25 von der Lichtquelle 6 normal auf die Längsachse 26 des Kalibrierelements 20 auftrifft und dass der Lichtfokus 27 zentral, also im Bereich der Längsachse 26, auf das Kalibrierelement 20 trifft. Das in der Ebene des einfallenden Lichtes abtrahlende Streulicht 30 wird von den Detektoranordnungen 8, 8' erfasst. Da sowohl die Streulichtintensität eingestellt werden kann und bekannt ist und mehrere Detektoranordnungen 8, 8' aufgrund der Eigenschaften des Kalibrierelements 20 dieselbe Streulichtintensität erfassen, können die Detektoranordnungen 8, 8' bzw. die damit verbundenen Auswerteelektronik einfach kalibriert werden.

## Patentansprüche

1. Kalibrierelement mit einem Streukörper (21), der in einer Trägermatrix eingebettete Streuzentren und einen Absorberkörper (23) aufweist, **dadurch gekennzeichnet, dass** der Streukörper (21) zylindrisch ausgeführt ist und der Absorberkörper (23) zylindrisch ausgeführt und konzentrisch um den Streukörper (21) angeordnet ist.

2. Kalibrierelement nach Anspruch 1, **dadurch gekennzeichnet, dass** radial zwischen Streukörper (21) und Absorberkörper (23) und konzentrisch dazu ein erster Glaszylinder (22) angeordnet ist.

3. Kalibrierelement nach Anspruch 1 oder 2, **dadurch gekennzeichnet, dass** radial außen ein zweiter Glaszylinder (24) konzentrisch um den Absorberkörper (23) angeordnet ist.

4. Verfahren zum Kalibrieren eines Streulichtmessgeräts mit einer Messkammer (3), in die ein Lichtstrahl (25) gerichtet wird und einer Anzahl von Detetektoranordnungen (8, 8') zur Erfassung des Streulichtes (30), wobei in der Messkammer (3) ein Kalibrierelement (20) nach einem der Ansprüche 1 bis 3 angeordnet wird, **dadurch gekennzeichnet, dass** das Kalibrierelement (20) derart angeordnet wird, dass der Lichtstrahl (25) normal auf die Längsachse (26) des Kalibrierelements (20) auftrifft und der Lichtfokus (27) zentral auf die Längsachse (26) des Kalibrierelements (20) trifft.

5. Verfahren nach Anspruch 4, **dadurch gekennzeichnet, dass** der Lichtstrahl (25) auf die Hälfte bis ein Drittel, bevorzugt auf ein Fünftel bis ein Zehntel, des Durchmessers des Streukörpers (21) fokussiert wird.
